# EUROPEAN PATENT SPECIFICATION

(11) **EP 1 439 140 B1**
(45) Date of publication and mention of the grant of the patent: **05.04.2006**
(21) Application number: 04000392.3
(22) Date of filing: 10.01.2004
(51) Int. Cl.: B65G 47/71, B65G 21/14

(54) **System for distributing articles**
Verteilsystem für Gegenstände
Système de distribution pour articles

(30) Priority: 20.01.2003 IT BO20030029
(43) Date of publication of application: 21.07.2004
(73) Proprietor: Cosmopack S.r.l., 41100 Modena (IT)
(72) Inventor: Vecchi, Celeste, 41100 Modena (IT); Campagnoli, Roberto, 40134 Bologna (IT); Lacinio, Salvatore, 40050 Monte Sanpietro Bologna (IT)
(74) Representative: Gustorf, Gerhard

(56) References cited:
- EP-A- 1 245 512
- FR-A- 2 792 921

## Description

### Technical field

-The present invention relates to a system for distributing articles.

-More particularly, the present invention relates to a system for distributing articles from a first line having a single channel to a second line having multiple channels.

### Prior art

-German Patent DE-43.43.477 discloses a system for distributing articles which is substantially designed to distribute articles arriving from a first line for supplying articles, with a single supply channel, to a second line for receiving articles, having a plurality of receiving channels.

-The said distribution system substantially comprises: conveyor belt means, extending longitudinally to form an underlying article conveyor belt; a first line for supplying articles, positioned upstream, comprising a single supply channel having an output opening, the said single supply channel being formed by a pair of longitudinal guides positioned parallel and spaced apart transversely; a second line for receiving articles, positioned downstream, comprising a plurality of receiving channels having a plurality of inlet openings, the said inlet openings being movable longitudinally, and the said plurality of receiving channels being formed from a plurality of telescopic longitudinal guides positioned parallel and spaced apart transversely; distribution means, positioned between the said first line for supplying articles and the said second line for receiving articles, comprising an articulated distribution channel having an inlet opening positioned in an articulated way in the proximity of the outlet opening of the single supply channel and an outlet opening discharging in the proximity of the inlet openings of the plurality of receiving channels, the said outlet opening of the said distribution channel being movable longitudinally, the said outlet opening of the said distribution channel being movable transversely with respect to the plurality of inlet openings of the receiving channels, and the said distribution channel being formed by two pairs of telescopic articulated longitudinal guides positioned parallel and spaced apart transversely; actuator means for moving the outlet opening of the said distribution channel and the inlet openings of the receiving channels longitudinally, and for moving the said outlet opening of the said distribution channel transversely with respect to the inlet openings of the receiving channels.

-The said system has a number of drawbacks.

-A first drawback arises from the fact that, during the downstream movement of the articles in which they are channelled and guided along the distribution channel, the specified interval between them is not maintained, in other words the specified spacing between them is not maintained, and this leads to incorrect distribution of the articles with respect to the receiving channels.

-This because, during this movement, which is imparted solely by the underlying conveyor belt, the said articles come into contact with and rub along the walls of the guides of the distribution channel, which move forwards and backwards, consequently braking the downstream movement of the articles and causing a relative loss of spacing with respect to the articles positioned upstream and downstream.

-This drawback is particularly marked in the handling of light products and/or products such as bottles, cans, boxes, bricks and the like, which, in the course of the aforesaid movement between the guides of the distribution channel, and especially when the said distribution channel is positioned obliquely with respect to the longitudinal direction of advance and propulsion generated by the underlying conveyor belt, are moved in the downstream direction while rubbing along or striking against the wall positioned in the downstream part of the said channel, and therefore, principally, as a result of the said rubbing of the articles along the guides with a high degree of friction, a relative motion is generated between the underlying belt and the article, thus causing an irregular advance of the articles with intervals of arrest and/or deceleration, with a consequent loss of the spacing interval specified between the articles and a subsequent incorrect distribution of the said articles.

-A second drawback arises from the fact that, during the said movement, and again for the aforesaid reasons, articles having a high centre of gravity and a small bearing surface, such as bottles of mineral water or the like, may be tipped over, thus stopping the processing machine.

-A third drawback arises from the fact that, again during the said movement, and again as a result of the rubbing of the articles against the guides, the outer surfaces of the articles become damaged.

Patent document EP-A-1 245 512 discloses a system for distributing articles with distribution means comprising a pair of parallel conveyor belts. The belts are only transversely movable.

### Brief summary of the invention

-The object of the present invention is to overcome the drawbacks described above.

-The invention, which is characterized by the claims, resolves the problem of creating a system for distributing articles, comprising: underlying conveyor means extending longitudinally to form an underlying active transport surface for conveying articles; a first line for supplying articles, positioned upstream, comprising a single article supply channel having an outlet opening; a second line for receiving articles, positioned downstream, comprising a plurality of article-receiving channels having a plurality of inlet openings; distribution means, positioned between the said first line for supplying articles and the said second line for receiving articles, to form a distribution channel for receiving the articles arriving from the said outlet opening of the first supply line and for distributing them selectively in the proximity of the inlet openings of the said second receiving line having a plurality of channels; and actuator means for moving the outlet opening of the said distribution channel; the distribution means comprise at least one pair of conveyors with conveyor belts, the said conveyor belts have corresponding conveying branches positioned parallel to each other, facing each other, and spaced apart from each other to form an active conveying and distribution section having an inlet opening and an outlet opening, characterized in that the conveyors are longitudinally extendable and retractable, and in that the said outlet opening is extendable and retractable longitudinally with respect to the inlet opening of the said conveyor section.

-The use of a system of the aforesaid type yields the following results: the articles do not rub against the walls of the distribution channel; the articles do not rotate about their own axes; and the spacing between the articles is maintained correctly during the distribution.

-The advantages achieved by means of the present invention consist, substantially, in the fact that the distribution system becomes more reliable, more efficient and safer, in the fact that the articles are not tipped over, and in the fact that the outer surfaces of the objects are not subject to damage.

### Brief description of the figures

-Further characteristics and advantages of the present invention will be made clearer by the following description of some preferred practical embodiments, provided here purely by way of example and without restrictive intent, with reference to the attached figures, in which:
- Figure 1 shows schematically, in a view from above, the system according to the present invention in a first embodiment in a particular operating position;
- Figure 1A shows schematically, in a view from above, the system of Fig. 1 in a different operating position;
- Figure 1B shows schematically, in a view from above, the system of Fig. 1 in a different operating position;
- Figure 1C shows schematically, in a perspective view, the system of Fig. 1;
- Figure 1D shows a detail of construction;
- Figure 1 E shows a detail of construction;
- Figures 2 and 2A show a second embodiment of the invention;
- Figures 3 and 3A show a third embodiment of the invention.

### Exemplary description of the first preferred embodiment

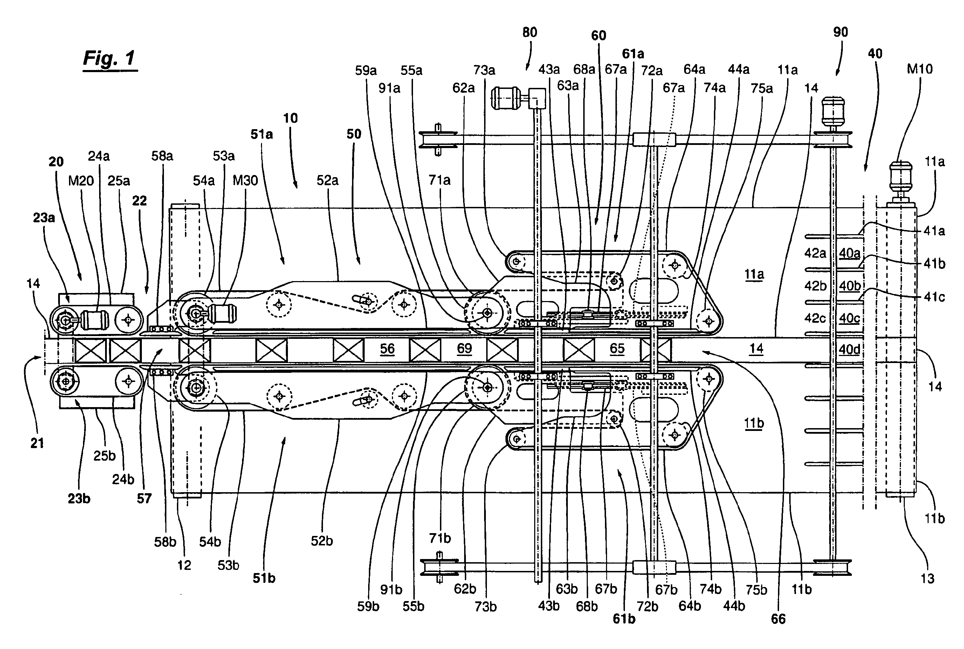

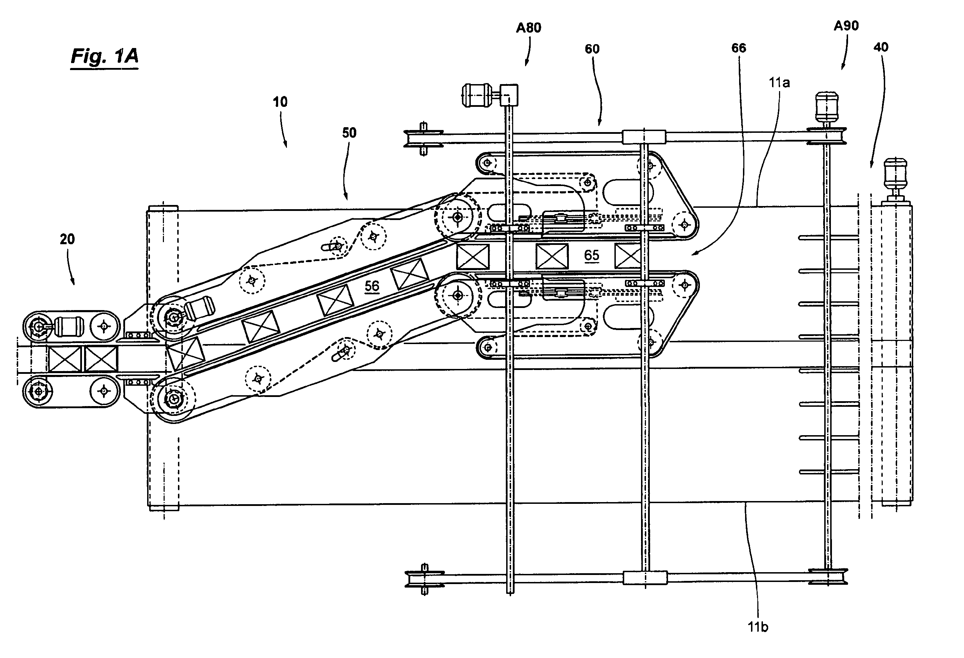

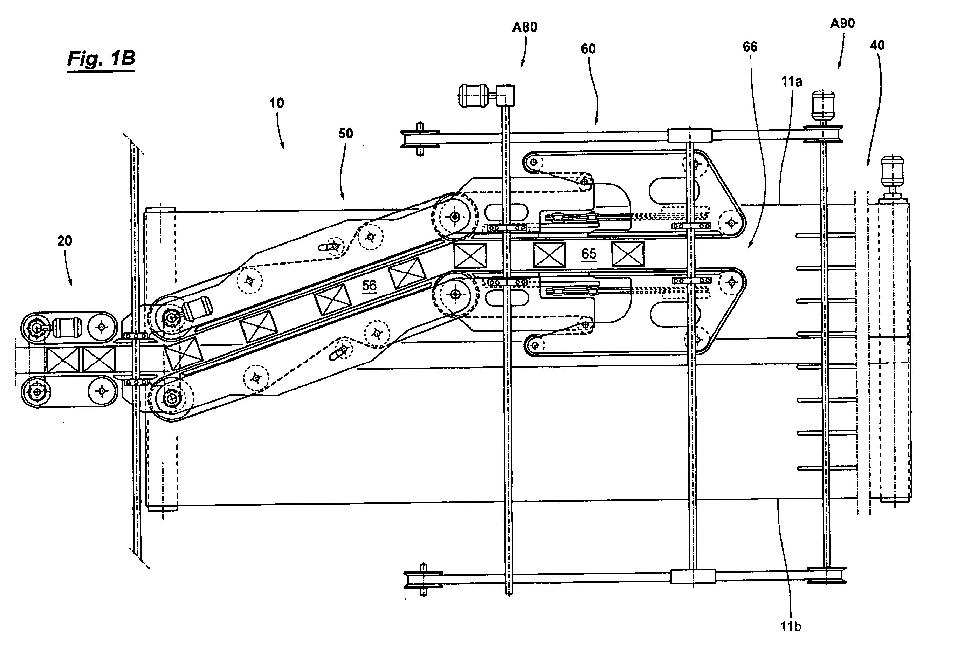

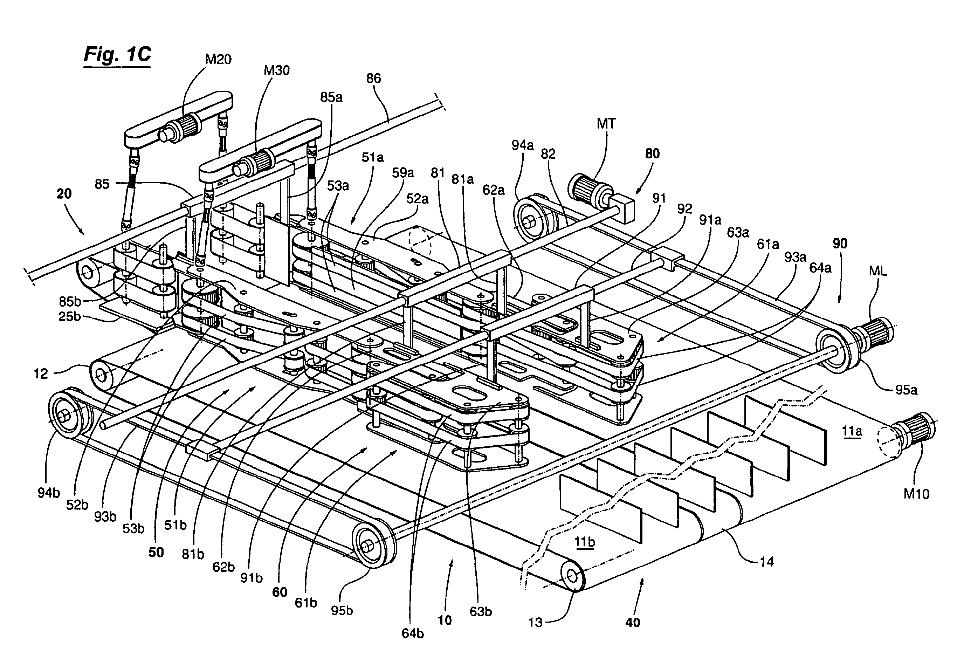

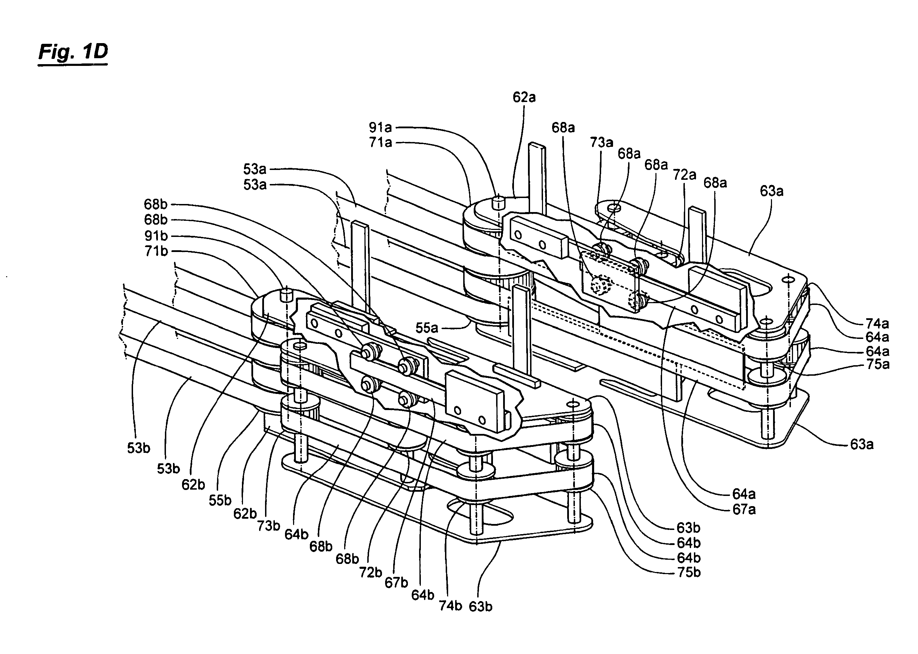

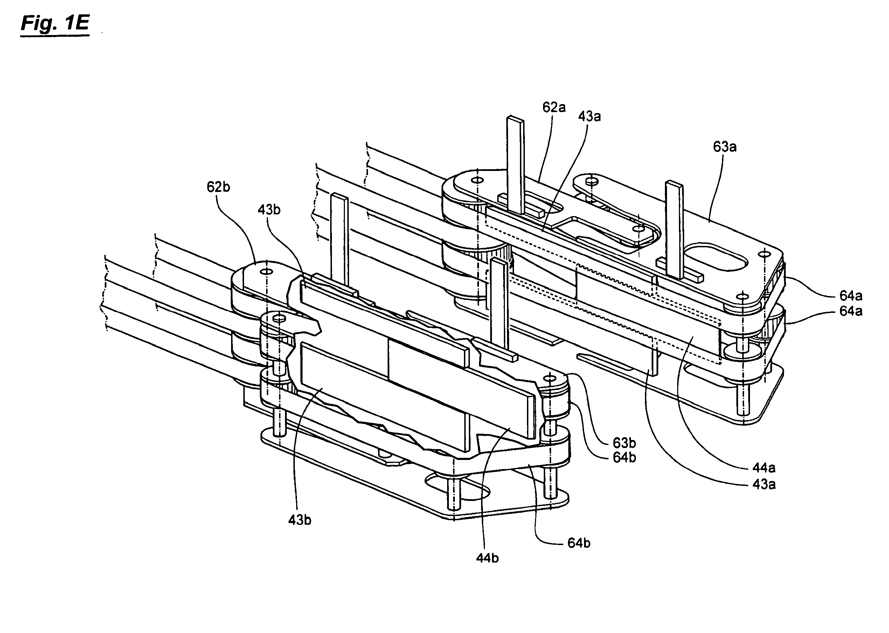

-with reference to Figures 1, 1A, 1B and 1C, the system according to the present invention comprises underlying conveyor means 10, i.e. an active underlying transport surface, preferably having a conveyor belt consisting of two belts, 11a and 11b, running around driving rollers 12 and 13, between which is placed a belt 14 running around the aforesaid roller 13 downstream and upstream around a roller which is not illustrated, the said belt 14 additionally acting as a conveyor belt for the supply line 20 described more fully below, and the said underlying conveyor means 10 preferably being driven by a motor M10. -If required and/or if necessary, the said underlying conveyor means 10 can have a single conveyor belt, or a plurality of adjacent conveyor belts extending longitudinally, or a plurality of adjacent transverse conveyor rollers which are made to rotate, or other equipment for forming an underlying active transport surface which can engage the bases of the articles in order to move them from the upstream to the downstream end, as is described more fully below.

-The downstream end of the first line 20 for supplying articles is positioned in the proximity of the upstream area of the underlying conveyor means 10, and comprises a single article supply channel 21 having an outlet opening 22, the said supply channel 21 being preferably formed by a pair of conveyors 23a and 23b, supported by the machine frame by means of supports 25a and 25b, the said conveyors 23a and 23b having corresponding conveyor belts 24a and 24b running in closed loops around corresponding wheels and driven, preferably, by a motor M20, the conveyor belt 14 acting as an underlying support and transport surface.

-The upstream end of a second line 40 for receiving articles is positioned in the proximity of the downstream end of the underlying conveyor means 10, and comprises a plurality of receiving channels 40a, 40b, 40c, 40d, etc., which are formed by a plurality of guides 41a, 41b, etc., whose upstream portions form a plurality of inlet openings 42a, 42b, 42c, etc.

-Above the conveyor belts 11a, 14, 11b, between the said first line 10 for supplying articles and the said second line 40 for receiving articles, there are positioned distribution means, indicated as a whole by 50 and 60, comprising a first conveyor 50 and a second conveyor 60, positioned consecutively and hinged together at the junction point, forming a conveying and distribution channel 56-65 which conveys the articles in an active and positive way, in other words a conveying and distribution channel 56-65 having active lateral conveying walls moving downstream as described more fully below.

-The first conveyor 50 comprises a corresponding pair of conveyors 51a and 51b, comprising corresponding frames 52a and 52b which are suspended from above so that they do not bear on the belts 11a, 11b and 14.

-The said pair of conveyors 51a and 51b have corresponding conveyor belts 53a and 53b, running in a closed path around corresponding return wheels 54a-55a and 54b-55b, the active branches of the said conveyor belts 53a and 53b being positioned parallel to each other, facing each other and spaced apart, to form a first conveyor section 56 of the conveying and distribution channel 56-65, the said first conveyor section 56 having an inlet opening 57 positioned in the proximity of the outlet opening 22 of the first line 20 for supplying articles.

-In order to improve the positive transport of the articles, it is preferable to provide two corresponding backing plates 59a and 59b for the belts 53a and 53b.

-The frames 52a and 52b have their upstream portions suspended from above (see Fig. 1C) by means of a hanging support 85, with arms 85a and 85b which can be spaced apart transversely when the machine is set up, the said support 85 being carried by a cross member 86 fixed to the machine frame.

-Additionally, the upstream ends of the said two frames 52a and 52b are hinged and movable longitudinally, and are provided with a pair of short guides 58a and 58b for joining and linking the outlet opening 22 to the inlet opening 57 in order to compensate and optimize the displacements which are necessary when the said pair of conveyors 51a and 51b assume the inclined position shown in Fig. 1A.

-The second conveyor 60 comprises a pair of longitudinally extendable and retractable conveyors 61a and 61b, as described more fully below, which are positioned consecutively and hinged downstream of the first pair of conveyors 51a and 51b, and comprise corresponding frames 62a-63a and 62b-63b, which are suspended from above (see Fig. 1 and 1C) so that they do not bear on the belts 11a, 11b and 14.

-The said pair of longitudinally extendable and retractable conveyors 61a and 61b have corresponding conveyor belts 64a and 64b, running in closed paths around corresponding return wheels, the active transport branches of the said belts 64a and 64b being positioned parallel to each other, facing each other and spaced apart, to form the second conveyor section 65 of the aforesaid conveying and distribution channel 56-65 for active and positive transport, the said second section 65 having an outlet opening 66 which is longitudinally extendable and retractable with respect to the inlet opening 69, and the said outlet opening 66 being disposed in the proximity of the inlet openings 42a, 42b, etc., of the second line 40 with multiple channels 40a, 40b, 40c, etc.

-To allow longitudinal extension and retraction, each individual longitudinally extendable and retractable conveyor 61a and 61b comprises two corresponding frames 62a-63a and 62b-63b, which can be moved away from and towards each other, and which are coupled together in a guided way and can slide longitudinally, using, for example (see also Figg. 1 and 1D), a coupling of the type having a corresponding longitudinal bar 67a and 67b, fixed to the corresponding second downstream frame 63a and 63b, which is designed to slide in a guided way between corresponding upper and lower free-running rollers 68a and 68b carried by the corresponding first upstream frame 62a and 62b.

-To enable the second downstream frames 63a and 63b to be moved with respect to the first upstream frames 62a and 62b without modifying the lengths of the paths of the corresponding conveyor belts 64a and 64b, each of which consists of two pairs of belts in the illustrated example, and without changing the conveying speed used in operation, the first upstream frames 62a and 62b support the return wheels 71a-72a and 71b-72b, and the second downstream frames 63a and 63b support the return wheels 73a-74a-75a and 73b-74b-75b, to form an outward and return path for the belts 64a and 64b such that the displacements between the wheels are compensated during the said longitudinal displacements between the frames.

-In order to improve the positive transport of the articles (see Fig. 1E), it is preferable to provide backing plates for the conveyor belts 64a and 64b, in which a corresponding pair of plates 43a-43a and 43b-43b is fixed to the frames 62a and 62b, and a corresponding plate 44a and 44b is fixed to the frames 63a and 63b, in which the said backing plates 43a-44a-43a, 43b-44b-43b are engaged with each other longitudinally and slidably so that the frames can be moved longitudinally with respect to each other while keeping the backing function operative, since the belt 64a and 64b bears substantially in the proximity of the longitudinal junction line between two plates 43a-44a which are movable with respect to each other.

-In the present embodiment, a motor M30, acting through a mechanical transmission, drives the upstream return wheels 54a and 54b of the conveyor belts 53a and 53b of the first conveyor 50, in which the downstream wheels 55a and 55b are keyed on a corresponding vertical shaft 91a and 91b, on which are also keyed the upstream wheels 71a and 71b of the conveyor belts 64a and 64b of the second conveyor 60, an equal speed preferably being imparted to the said belts 53a-53b-64a-64b and this speed, again preferably, being substantially equal to the speed of advance of the belts 11a, 11b and 14 of the underlying conveyor.

-In the upper part of the machine there are provided actuator means 80 and 90 (see Figg. 1 and 1C) for moving, in the transverse and longitudinal directions respectively, the outlet opening 66 of the second conveying and distribution section 65 of the longitudinally extendable and retractable conveyors 61a and 61b.

-With regard to the actuator means 80, for the provision of the transverse motion, in the present example of embodiment, the first pair of frames 62a and 62b is suspended from above by means of a hanging support 81 with arms 81a and 81b which can be spaced transversely for setting up the machine, in which the said support 81 is moved transversely on command by means of first linear movement means, such as a helical screw and nut coupling, comprising a threaded transverse bar 82 and a nut formed in the support 81, the said threaded bar 82 being carried by the machine frame, and a motor MT rotating the said threaded bar 82 in order to move the support 81 transversely.

-With regard to the actuator,means 90, for the provision of the longitudinal motion, in the present example of embodiment, the second pair of frames 63a and 63b is suspended from above by means of a hanging support 91 with arms 91a and 91b which can be spaced transversely for setting up the machine, the said support 91 being coupled so that it can slide transversely to a transverse bar 92, to permit free transverse movement, the said bar 92 and the corresponding support 91 being moved longitudinally on command by means of second linear movement means, for example by having the opposite ends of the said bar 92 fixed on a pair of lateral belts 93a and 93b which run around corresponding pulleys 94a-95a and 94b-95b, and the pair of pulleys 95a and 95b being driven by means of a shaft and corresponding motor ML.

-These actuator means 80 and 90 can be used, substantially, to move the pair of longitudinally extendable and retractable conveyors 61a and 61b transversely, while constantly keeping their supply axis, in other words the axis of the second conveyor section-channel 65, parallel to the receiving axis of the receiving channels 40a, 40b, 40c, etc., of the second line 40, in which the said transverse movement being provided by moving the support 81 transversely by means of the motor MT while the support 91 is free to slide with respect to the bar 92.

-These actuator means 80 and 90 can also be used to move the second frames 63a and 63b longitudinally, independently of the aforesaid transverse movement, the said longitudinal movement being provided by moving the bar 93 and the corresponding support 91 longitudinally by means of the motor ML.

### Operation

-With this construction, preferably, for example, the underlying conveyor belts 14-11a-11b, the belts 53a-53b of the conveyors 51a-51b, and the belts 64a-64b of the longitudinally extendable and retractable conveyors 61a-61b are made to run at a first speed V1, and the belts 24a-24b of the conveyors 23a-23b are made to run at a second speed V2, where V1 > V2 (i.e. V1 is greater than V2).

-With this configuration, the articles are conveyed by means of the belts 24a-24b along the supply channel 21 in a compact formation, at a speed V2, with a relative movement between the underlying belt 14 and the articles.

-When the articles leave the outlet opening 22 of the supply channel 21, they accelerate to the speed V2 of the underlying belt 14, so that an interval known as the spacing is provided between the said articles, and the said articles then arrive at the inlet opening 57 of the conveying and distribution channel 56-65, between the active branches of the belts 53a-53b, which move at the speed V1.

-The articles are then conveyed along the conveying and distribution channel 56-65 towards the outlet opening 66, being transported in an active and positive way by the underlying belts 11a-14-11b, the lateral conveyor belts 53a-53b and the lateral conveyor belts 64a-64b, the said operating means moving at the same speed V1, and the said conveyor belts 53a-53b and 64a-64b forming active lateral conveying walls moving in a downstream direction.

-Finally, the actuator means 80 and 90 are used to move the outlet opening 66 transversely (see Fig. 1A) and also longitudinally (see Fig. 1B), in step with the release of the articles in the proximity of the said outlet opening 66, in order that the said articles can be distributed in a positive way, in other words by positive transport, in succession, in the proximity of and upstream of the inlet openings 42a, 42b, 42c, etc., of the receiving channels 40a, 40b, 40c, etc., so that the said articles can then be inserted into the said channels by the longitudinal advance of the said articles provided by the underlying conveyor belts 11a-14-11b.

-In this context, it should be noted that, when the frames 63a and 63b move in the upstream or downstream direction, in other words when the longitudinally extendable and retractable conveyors 61 a and 61 b are extended or retracted, the conveyor belts 64a and 64b, and more particularly the facing branches which form the conveying channel 65, continue to slide in the downstream direction without changing their sliding speed, and therefore without changing the speed of movement of the articles positioned between the said belts 64a and 64b, the said speed being preferably equal to that of the underlying conveyor 11a-14-11b.

-With reference to the above description, it is clear that the articles are moved and conveyed along the conveying and distribution channel 56-65 and towards the transversely and longitudinally movable outlet opening 66 by means of a positive active transport action achieved by means of the underlying belt 11a-14-11b and by means of active lateral conveying walls 53a-53b and 64a-64b, both moving in the downstream direction, so that there is no collision with and/or rubbing against the guides and the specified spacing is positively maintained, thus overcoming the aforementioned drawbacks.

### Exemplary description of a second embodiment

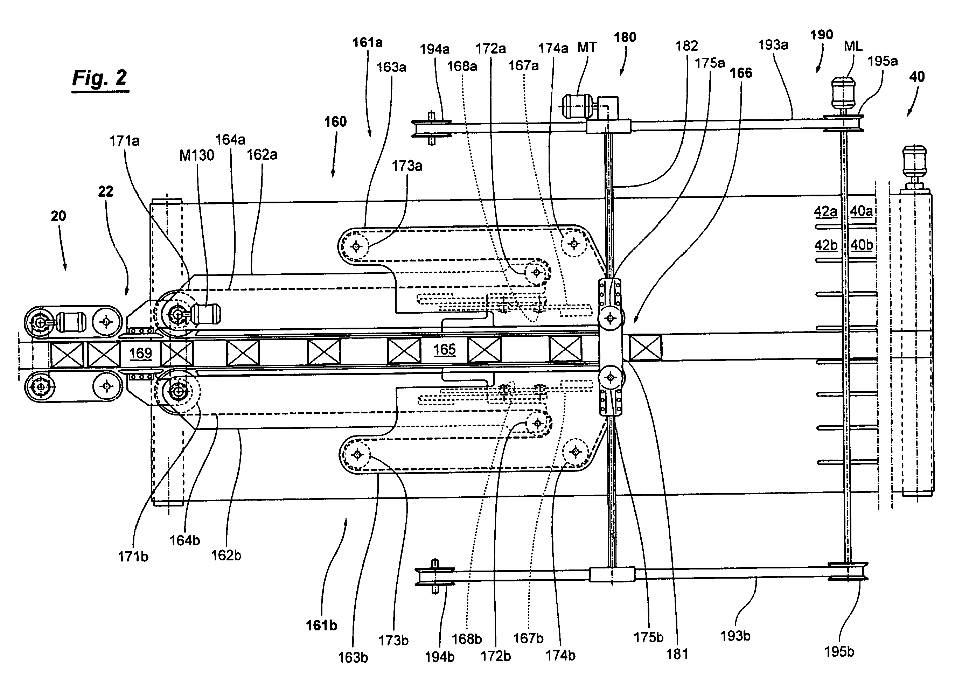

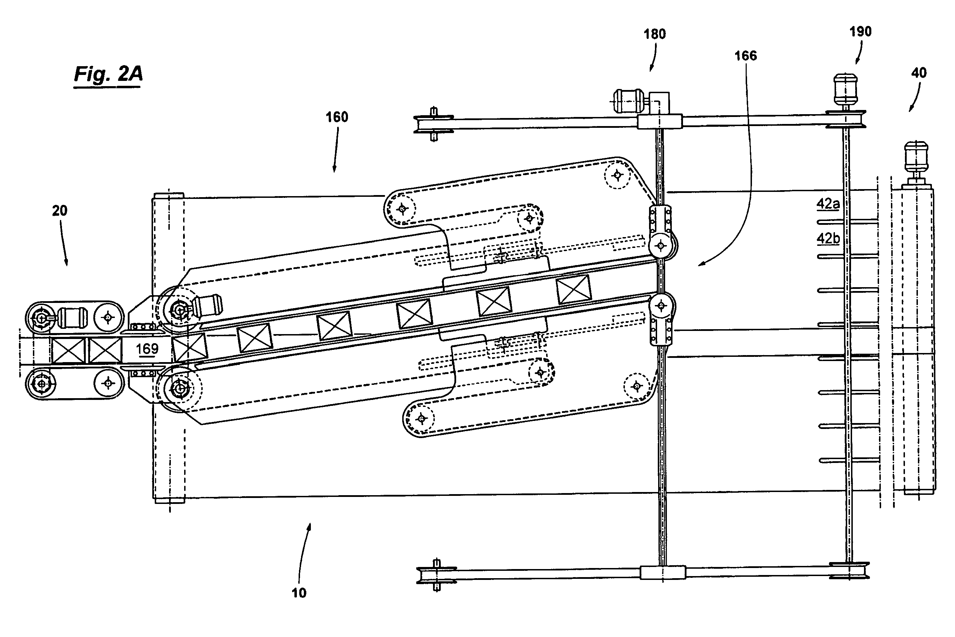

-With reference to Figures 2 and 2A, these show a second embodiment of the present invention, and more precisely a simplified embodiment.

-In the following description, similar reference numbers are used to refer to elements already described in the previous description.

-In the said second embodiment (Figs. 2 and 2A), which may be compared with the first embodiment, there is a longitudinally extendable and retractable conveyor 160 having a technical and functional structure similar to that of the aforesaid longitudinally extendable and retractable conveyor 60, and therefore comprising a pair of longitudinally extendable and retractable conveyors 161a and 161b, which are positioned between the first line 20 for supplying articles and the second line 40 for receiving articles.

-The said pair of longitudinally extendable and retractable conveyors 161a and 161b has corresponding conveyor belts 164a and 164b, running in a closed path around corresponding return wheels, the active conveying branches of the said belts 164a and 164b being positioned parallel to each other, facing each other and spaced apart, to form a conveying section 165 providing positive active transport, and having an outlet opening 166 which is longitudinally extendable and retractable with respect to the inlet opening 169, the said outlet opening 166 being positioned in the proximity of the inlet openings 42a, 42b, etc., of the second line 40 with multiple channels.

-In this embodiment also, each individual longitudinally extendable and retractable conveyor 161a and 161b comprises two pairs of corresponding frames 162a-163a, 162b-163b, coupled together in a guided way and slidable longitudinally as described above by means of a corresponding longitudinal bar 167a and 167b fixed to each of the frames 163a and 163b, this bar being slidable in a guided way between corresponding upper and lower free-running rollers 168a and 168b carried by the other frame 162a and 162b, the first pair of frames 162a-162b having its upstream ends suspended from above and positioned and hinged in the proximity of the outlet opening 22 of the first supply line 20, and a motor M130 driving, through a mechanical transmission, the return wheels 171a and 171b of the said belts 164a and 164b.

-Additionally, as in the first embodiment, each of the first frames 162a and 162b is designed to support two return wheels 171a-172a and 171b-172b, and each of the second frames 163a and 163b is designed to support three return wheels 173a-174a-175a and 173b-174b-175b, for the purposes stated previously.

-In the upper part of the machine there are provided actuator means 180 and 190 for moving, transversely and longitudinally respectively, the outlet opening 166 of the conveying and distribution section 165 of the longitudinally extendable and retractable conveyor 160.

-As regards the actuator means 180 for executing the transverse movement, the downstream ends of the second frames 163a-163b are suspended from above by a hanging support 181, the said support 181 being movable transversely on command, for example by means of a helical screw and nut coupling, with a transverse threaded bar 182 and a nut provided in the support 181, and with a motor MT for rotating the said threaded bar 182.

-As regards the actuator means 190 for executing the longitudinal movement, the said threaded bar 182 and the corresponding support 181 are also moved longitudinally on command, for example by having the opposite ends of the said bar 182 fixed on a pair of lateral belts 193a and 193b, which run around corresponding pulleys 194a-195a and 194b-195b, the pair of pulleys 195a and 195b being driven by means of a shaft and a motor ML.

### Exemplary description of a third embodiment

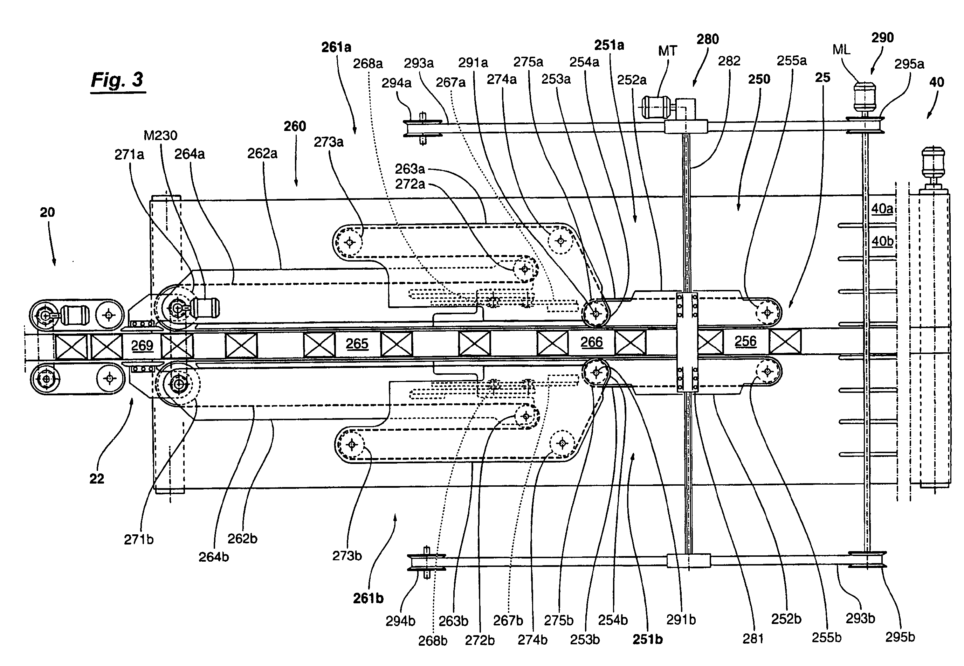

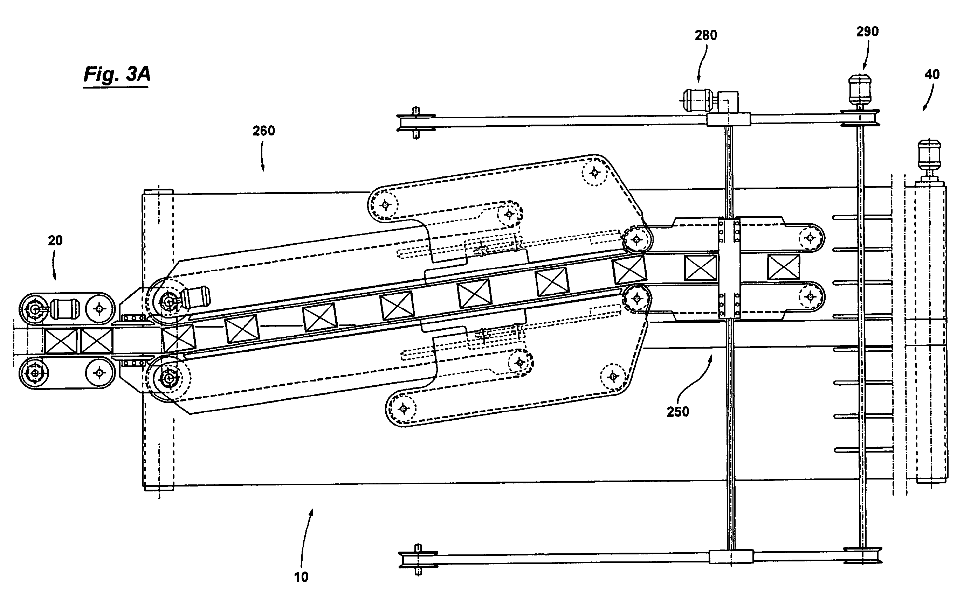

-With reference to Figures 3 and 3A, these show a third embodiment of the present invention.

-In the following description, similar reference numbers are used to refer to elements already described in the previous description.

-In the said third embodiment (Figs. 3 and 3A), which may be compared with the first embodiment and the second embodiment, there is a longitudinally extendable and retractable conveyor 260 having a technical and functional structure similar to that of the aforesaid longitudinally extendable and retractable conveyor 60 or 160, and therefore comprising a pair of longitudinally extendable and retractable conveyors 261a and 261b, which are positioned between the first line 20 for supplying articles and a second conveyor 250, the latter having its upstream end positioned consecutively to the downstream end 266 of the conveyor 260 and hinged thereto, in order to form a conveying and distribution channel 265-256 providing positive active transport for the articles.

-The said pair of longitudinally extendable and retractable conveyors 261a and 261b has corresponding conveyor belts 264a and 264b, running in a closed path around corresponding return wheels, the active conveying branches of the said belts 264a and 264b being positioned parallel to each other, facing each other and spaced apart, to form the conveying section 265 providing positive active transport, and having an outlet opening 266 which is longitudinally movable with respect to the inlet opening 269, the said outlet opening 266 discharging into a subsequent conveying section 256 formed by the conveyor 250.

-In this third embodiment also, each individual longitudinally extendable and retractable conveyor 261a and 261b comprises two pairs of corresponding frames 262a-263a, 262b-263b, coupled together in a guided way and slidable longitudinally as described above by means of a corresponding longitudinal bar 267a and 267b fixed to each of the frames 263a and 263b, this bar being slidable in a guided way between corresponding upper and lower free-running rollers 268a and 268b carried by the other frame 262a and 262b, the first pair of frames 262a-262b having its upstream ends suspended from above and positioned and hinged in the proximity of the outlet opening 22 of the first supply line 20, and a motor M230 driving, through a mechanical transmission, the return wheels 271a and 271b of the said belts 264a and 264b.

-Additionally, as in the first and second embodiments, each of the first frames 262a and 262b is designed to support two return wheels 271a-272a and 271b-272b, and each of the second frames 263a and 263b is designed to support three return wheels 273a-274a-275a and 273b-274b-275b, for the purposes stated previously.

-The conveyor 250 is substantially similar to the conveyor 50 of the first embodiment, and substantially comprises a corresponding pair of conveyors 251a and 251b, corresponding frames 252a and 252b and corresponding conveyor belts 253a and 253b, running in a closed path around corresponding return wheels 254a-255a and 254b-255b, the upstream wheels 254a and 254b being rotated because they are keyed on the shafts 291a and 291b which also carry the wheels 275a and 275b.

-In the upper part of the machine there are provided actuator means 280 and 290 for moving, transversely and longitudinally respectively, the conveyor 250, while keeping the supply axis of the latter, in other words of the second conveyor section-channel 256, constantly parallel to the receiving axis of the receiving channels 40a, 40b, 40c, etc.

-As regards the actuator means 280 for executing the transverse movement, the frames 252a-252b are suspended from above by a hanging support 281, which is movable transversely on command, for example by means of a helical screw and nut coupling, with a transverse threaded bar 282 and a nut provided in the support 281, and with a motor MT for rotating the said threaded bar 282.

-As regards the actuator means 290 for executing the longitudinal movement, the said threaded bar 282 and the corresponding support 281 are also moved longitudinally on command, for example by having the opposite ends of the said bar 282 fixed on a pair of lateral belts 293a and 293b, which run around corresponding pulleys 294a-295a and 294b-295b, the pair of pulleys 295a and 295b being driven by means of a shaft and a motor ML.

-The description of the various possible exemplary embodiments of the distribution system is provided purely by way of example and without restrictive intent, and may, therefore, clearly be modified or varied in any way suggested by experience and/or by operation or use, within the scope of the following claims, which form an integral part of the present description.

## Claims

1. System for distributing articles, comprising:
- underlying conveyor means (10) extending longitudinally to form an underlying active transport surface (11a, 14, 11b) for conveying articles;
- a first line (20) for supplying articles, positioned upstream, comprising a single article-supply channel (21) having an outlet opening (22);
- a second line (40) for receiving articles, positioned downstream, comprising a plurality of article-receiving channels (40a, 40b, 40c, etc.) having a plurality of inlet openings (42a, 42b, 42c, etc.);
- distribution means, positioned between the said first line (20) for supplying articles and the said second line (40) for receiving articles, to form a distribution channel (65) for receiving the articles arriving from the said outlet opening (22) of the first supply line (20) and for distributing them selectively in the proximity of the inlet openings (42a, 42b, 42c, etc.) of the said second receiving line (40) having a plurality of channels (40a, 40b, 40c, etc.); and
- actuator means (80, 90) for moving the outlet opening (66) of the said distribution channel,
the distribution means comprise at least one pair of conveyors (61a-61b; 161a-161b; 261a-261b) with conveyor belts (64a-64b; 164a-164b; 264a-264b), the said conveyor belts (64a-64b; 164a-164b; 264a-264b) have corresponding conveying branches positioned parallel to each other, facing each other, and spaced apart from each other to form an active conveying and distribution section (65; 165; 265) having an inlet opening (69; 169; 269) and an outlet opening (66; 166; 266); **characterized in that** the conveyors (61a-61b ; 161a-161b; 261a-261b) are longitudinally extendable and retractable; and
**in that** the said outlet opening (66, 166, 266) is extendable and retractable longitudinally with respect to the inlet opening (69; 169; 269) of the said conveyor section (65; 165; 265).

2. System for distributing articles according to Claim 1, **characterized in that** the said outlet opening (66; 166; 266) is moved longitudinally or transversely with respect to the inlet opening (69; 169; 269) by longitudinal extension or retraction of the said pair of longitudinally extendable and retractable conveyors (61a-61b; 161a-161b; 261a-261b) with conveyor belts (64a-64b; 164a-164b; 264a-264b).

3. System according to one of the preceding claims, **characterized in that** each longitudinally extendable and retractable conveyor (61a-61b; 161a-161b; 261a-261b) comprises two corresponding frames (62a-63a, 62b-63b; 162a-163a, 162b-163b; 262a-263a, 262b-263b) which are coupled together (67a-68a, 67b-68b; 167a-168a, 167b-168b; 267a-268a, 267b-268b) slidably and with longitudinal guidance.

4. System for distributing articles according to Claim 3, **characterized in that** the said outlet opening (66; 166; 266) is moved longitudinally or transversely with respect to the inlet opening (69; 169; 269) by longitudinally moving the two frames (63a-63b; 163a-163b; 263a-263b) away from or towards the other two frames (62a-62b; 162a-162b; 262a-262b).

5. System according to Claim 3, **characterized in that** the said coupling comprises a corresponding longitudinal bar (67a, 67b; 167a, 167b; 267a, 267b) fixed to a frame (63a; 63b; 163a, 163b; 263a, 263b) which is slidable in a guided way between corresponding upper and lower free-running rollers (68a; 68b; 168a, 168b; 268a, 268b) which are carried by the other corresponding frame (62a; 62b; 162a, 162b; 262a, 262b).

6. System according to one of the preceding claims, **characterized in that**, for each longitudinally extendable and retractable conveyor (61 a, 61b; 161a, 161b; 261a, 261b), a first frame (62a, 62b; 162a, 162b; 262a, 262b) is designed to support two return wheels (71a-72a, 71b-72b; 171a-172a; 171b-172b; 271a-272a, 271b-272b) and a second frame (63a, 63b; 163a, 163b; 263a, 263b) is designed to support three return wheels (73a-74a-75a, 73b-74b-75b; 173a-174a-175a, 173b-174b-175b; 273a-274a-275a, 273b-274b-275b), to form an outward and return path for the belts (64a, 64b; 164a, 164b; 264a, 264b) such that the length of the path for the belts is not changed during the longitudinal movement between the frames of each conveyor.

7. System according to one of the preceding claims, **characterized in that** the speed of longitudinal advance of the conveyor belts (64a-64b; 164a-164b; 264a-264b) of the said at least one pair of longitudinally extendable and retractable conveyors (61a-61b; 161a-161b; 261a, 261b) is substantially equal to the speed of longitudinal advance of the underlying active transport surface (11a, 14, 11b) of the underlying conveyor means (10).

8. System according to one of the preceding claims, **characterized in that** backing plates are provided for the conveyor belts (64a, 64b), one plate (43a, 43b) being fixed to the frames (62a, 62b) and one plate (44a, 44b) being fixed to the frames (63a, 63b), the said backing plates (43a-44a, 43b-44b) being engaged longitudinally and slidably with each other, and the belt (64a, 64b) bearing substantially in the proximity of the line of longitudinal junction between two plates (43a-44a) so that their frames (62a-63a, 62b-63b) can be moved longitudinally with respect to each other while keeping the backing function operative.

9. System according to one of Claims 1 to 8, **characterized in that** the distribution means comprise a further pair of conveyors (51a, 51b) with conveyor belts (53a, 53b) positioned upstream of the aforesaid at least one pair of longitudinally extendable and retractable conveyors (61a, 61b), **in that** the said further pair of conveyors (51a, 51b) has the conveying branches of its conveyor belts (53a, 53b) parallel to each other, facing each other and spaced apart to form a further conveying and distribution section (56), **in that** the said conveying and distribution section (56) has an inlet opening (57) positioned in the proximity of the outlet opening (22) of the first supply line (20), **in that** the said further pair of conveyors (51a, 51b) has a downstream end associated in a hinged way with the upstream end of the said at least one pair of longitudinally extendable and retractable conveyors (61a, 61b).

10. System according to Claim 9, **characterized in that** the actuator means (80, 90) move the said at least one pair of longitudinally extendable and retractable conveyors (61a, 61b) transversely while keeping the corresponding article-supply axis of the channel (65) parallel to the receiving axis of the receiving channels (40a, 40b, 40c, etc.), and move the second pair of frames (63a and 63b) longitudinally.

11. System according to one of Claims 9 and 10, **characterized in that** the said further pair of conveyors (51a, 51b) has a hinged and longitudinally movable upstream end positioned in the proximity of the outlet opening (22) of the first line (20) for supplying articles.

12. System according to one of Claims 9 to 11, **characterized in that** the said further pair of conveyors (51a, 51b) has in the proximity of its upstream end a pair of short guides (58a, 58b) for joining and linking the outlet opening (22) of the first line (20) for supplying articles, to the inlet opening (57) of the said further pair of conveyors (51a, 51b).

13. System according to one of Claims 9 to 12, **characterized in that** the speed of longitudinal advance of the conveyor belts (53a, 53b) of the said further pair of conveyors (51a, 51b) is substantially equal to the speed of longitudinal advance of the underlying active transport surface (11a, 14, 11b) of the underlying conveyor means (10).

14. System according to one of Claims 9 to 13, **characterized in that** the speed of longitudinal advance of the conveyor belts (53a, 53b) of the said further pair of conveyors (51a, 51b), the speed of longitudinal advance of the conveyor belts (64a, 64b) of the said at least one pair of longitudinally extendable and retractable conveyors (61a, 61b) and the speed of longitudinal advance of the conveyor belt (11) of the conveyor means (10), are substantially equal.

15. System according to one of Claims 9 to 14, **characterized in that** the said actuator means (80, 90) comprise a first support (81) for carrying the first pair of frames (62a, 62b), the said support (81) being moved transversely on command by first linear movement means (82, MT) and a second support for carrying the second pair of frames (63a, 63b), the said second support being coupled in a transversely slidable way to a transverse bar (92), the said bar (92) being moved longitudinally on command by second linear movement means (93a, 93b, 94a, 94b, 95a, 95b, ML).

16. System according to one of Claims 1 to 8, **characterized in that** the said at least one pair of longitudinally extendable and retractable conveyors (161a-161b) with conveyor belts (164a-164b) has an upstream end positioned in the proximity of the outlet opening (22) of the first line (20) for supplying articles and a downstream end positioned in the proximity of the inlet openings (42a, 42b, etc.) of the second line (40) for receiving articles, and **in that** the actuator means (180; 190) move the downstream ends of the said pair of longitudinally extendable and retractable conveyors (161a-161b) transversely and/or longitudinally.

17. System according to Claim 16, **characterized in that** the actuator means (180; 190) move the second pair of frames (163a, 163b) transversely and/or longitudinally.

18. System according to one of Claims 1 to 8, **characterized in that** the said at least one pair of longitudinally extendable and retractable conveyors (261a-261b) with conveyor belts (264a-264b) has an upstream end positioned in the proximity of the outlet opening (22) of the first line (20) for supplying articles, **in that** the distribution means comprise a further pair of conveyors (251a, 251b) with conveyor belts (253a, 253b) positioned downstream of the aforesaid at least one pair of longitudinally extendable and retractable conveyors (261a-261b), **in that** the said further pair of conveyors (251a, 251b) has conveyor belts (253a, 253b) with their conveying branches positioned parallel to each other, facing each other and spaced apart to form a further conveying and distribution section (256), and **in that** the actuator means (280; 290) move the said further pair of conveyors (251a, 251b) transversely and/or longitudinally.

19. System according to Claim 18, **characterized in that** the said actuator means (280, 290) move the said at least one pair of conveyors (251a, 251b) transversely and/or longitudinally while keeping the corresponding article-supply axis parallel to the receiving axis of the receiving channels (40a, 40b, 40c, etc.).

20. System according to one of Claims 18 and 19, **characterized in that** the speed of longitudinal advance of the conveyor belts (253a, 253b) of the said further pair of conveyors (251a, 251b) is substantially equal to the speed of longitudinal advance of the underlying active transport surface (11a, 14, 11b) of the underlying conveyor means (10).

21. System according to one of Claims 18 to 20, **characterized in that** the speed of longitudinal advance of the conveyor belts (253a, 253b) of the said further pair of conveyors (251a, 251b), the speed of longitudinal advance of the conveyor belts (264a, 264b) of the said at least one pair of longitudinally extendable and retractable conveyors (261a, 261b), and the speed of longitudinal advance of the underlying active transport surface (11a, 14, 11b) of the conveyor means (10) are substantially equal.

22. System according to one of the preceding claims, **characterized in that** the underlying active transport surface (11a, 14, 11b) of the underlying conveyor means (10) comprise a conveyor belt/s (11a, 14, 11b).

23. System according to one of the preceding claims, **characterized in that** the underlying active transport surface (11a, 14, 11b) of the underlying conveyor means (10) comprise a conveyor belt consisting of two belts (11a, 11b) running around driving return rollers (12 and 13) positioned upstream and downstream and a belt (14) running downstream around the aforesaid downstream return roller (13) which is positioned between the said two belts (11a, 11b), and **in that** the said last belt (14) additionally acting as a underlying conveyor belt for the first line (20) for supplying articles.

## Patentansprüche

1. System zur Verteilung von Gegenständen, umfassend:
- untere Fördermittel (10), die sich in Längsrichtung erstrecken und eine aktive, untere Transportfläche (11a, 14, 11b) für den Transport der Gegenstände bilden,
- einen ersten Förderabschnitt (20) für die Zufuhr der Gegenstände, der am Anfang der Förderrichtung liegt und einen einzigen Zuführkanal (21) mit einer Abgabeöffnung (22) aufweist,
- einen zweiten Förderabschnitt (40) für die Aufnahme der Gegenstände, der am Ende der Förderrichtung liegt und eine Mehrzahl von die Gegenstände empfangenden Kanälen (40a, 40b, 40c, etc.) mit einer entsprechenden Zahl von Eingangsöffnungen (42a, 42b, 42c, etc.) aufweist,
- Verteilmittel zwischen dem ersten Förderabschnitt (20) für die Zufuhr der Gegenstände und dem zweiten Förderabschnitt (40) für den Empfang der Gegenstände, wobei die Verteilmittel einen Verteilkanal (65) zur Aufnahme der von der Abgabeöffnung (22) des ersten Förderabschnitts (20) kommenden Gegenstände und zu deren Einzelverteilung in der Nähe der Eingangsöffnungen (42a, 42b, 42c, etc.) des zweiten Förderabschnitts (40) bilden, der eine Vielzahl von Kanälen (40a, 40b, 40c, etc.) aufweist,
- Verstellmittel (80, 90) zum Verschieben der Abgabeöffnung (66) des Verteilkanals (65), wobei die Verteilmittel wenigstens ein Paar von Förderern (61a-61b; 161a-161b; 261a-261b) mit Förderriemen (64a-64b; 164a-164b; 264a-264b) haben, welche entsprechende Fördertrume aufweisen, die parallel zueinander verlaufen und mit einem solchen Abstand einander gegenüberliegen, daß sie einen aktiven Förder- und Verteilabschnitt (65; 165; 265) mit einer Einführöffnung (69; 169; 269) und einer Abgabeöffnung (66; 166; 266) bilden,
**dadurch gekennzeichnet, daß** die Förderer (61a-61b; 161a-161b; 261a-261b) in Längsrichtung ausziehbar und verkürzbar sind, und daß die Abgabeöffnung (66; 166; 266) relativ zu der Einführöffnung (69; 169; 269) des Verteilabschnittes (56; 156; 256) in Längsrichtung ausziehbar und zurückziehbar ist.

2. System zur Verteilung von Gegenständen nach Anspruch 1, **dadurch gekennzeichnet, daß** die Abgabeöffnung (66; 166; 266) relativ zu der Einführöffnung (69; 169; 269) in Längsrichtung oder in Querrichtung verstellbar ist durch einen Längenauszug oder eine Längenverkürzung des Paares der in Längsrichtung ausziehbaren und verkürzbaren Förderer (61a-61b; 161a-161b; 261a-261b) mit den Förderriemen (64a-64b; 164a-164b; 264a-264b).

3. System nach einem der vorhergehenden Ansprüche, **dadurch gekennzeichnet, daß** jeder der in Längsrichtung ausziehbaren und verkürzbaren Förderer (61a-61b; 161a-161b; 261a-261b) zwei zugehörige Rahmen (62a-63a, 62b-63b; 162a-163a, 162b-163b; 262a-263a, 262b-263b) aufweist, die verschiebbar und durch Längsführungen miteinander gekoppelt (67a-68a, 67b-68b; 167a-168a, 167b-168b; 267a-268a, 267b-268b) sind.

4. System zur Verteilung von Gegenständen nach Anspruch 3, **dadurch gekennzeichnet, daß** die Abgabeöffnung (66; 166; 266) relativ zu der Einführöffnung (69; 169; 269) in Längsrichtung oder in Querrichtung verstellbar ist durch Längsverschiebung der beiden Rahmen (63a-63b; 163a-163b; 263a-263b) von den anderen beiden Rahmen (62a-62b; 162a-162b; 262a-262b) weg oder auf diese zu.

5. System nach Anspruch 3, **dadurch gekennzeichnet, daß** die Kopplungsmittel eine entsprechende, in Längrichtung verlaufende Stange (67a, 67b; 167a, 167b; 267a, 267b) aufweisen, die an einem Rahmen (63a, 63b; 163a, 163b; 263a, 263b) befestigt ist, welcher zwischen unteren und oberen, frei laufenden Rollen (68a, 68b; 168a, 168b; 268a, 268b) verschiebbar geführt ist, welche an dem entsprechenden anderen Rahmen (62a, 62b; 162a, 162b; 262a, 262b) gelagert sind.

6. System nach einem der vorhergehenden Ansprüche, **dadurch gekennzeichnet, daß** bei jedem in Längsrichtung ausziehbaren und verkürzbaren Förderer (61a, 61b; 161a, 161b; 261a, 261b) ein erster Rahmen (62a, 62b; 162a, 162b; 262a, 262b) so ausgebildet ist, daß er zwei Umlenkrollen (71a-72a, 71b-72b; 171a-172a, 171b-172b; 271a-272a, 271b-272b) trägt, während ein zweiter Rahmen (63a, 63b; 163a, 163b; 263a, 263b) so ausgebildet ist, daß er drei Umlenkrollen (73a-74a-75a, 73b-74b-75b; 173a-174a-175a, 173b-174b-175b; 273a-274a-275a, 273b-274b-275b) trägt, wodurch für die Förderriemen (64a, 64b; 164a, 164b; 264a, 264b) eine äußere Bahn für die Förderriemen (64a, 64b; 164a, 164b; 264a, 264b) gebildet wird derart, daß die Länge der Bahn für die Förderriemen während der Längsverschiebung zwischen den Rahmen jedes Förderers konstant bleibt.

7. System nach einem der vorhergehenden Ansprüche, **dadurch gekennzeichnet, daß** die Geschwindigkeit für die Längsbewegung der Förderriemen (64a-64b; 164a-164b; 264a-264b) von dem wenigstens einen Paar der in Längsrichtung ausziehbaren und verkürzbaren Förderern (61a-61b; 161a-161b; 261a-261b) im wesentlichen gleich der Geschwindigkeit der Längsverschiebung der darunter liegenden, aktiven Transportfläche (11a, 14, 11b) des unteren Förderers (10) ist.

8. System nach einem der vorhergehenden Ansprüche, **dadurch gekennzeichnet, daß** den Förderriemen (64a, 64b) Stützplatten zugeordnet sind, wobei eine Stützplatte (43a, 43b) an den Rahmen (62a, 62b) und eine Stützplatte (44a, 44b) an den Rahmen (63a, 63b) befestigt ist, welche Stützplatten (43a-44a, 43b-44b) in Längsrichtung zueinander verschiebbar ineinander eingreifen, wobei sich der Förderriemen (64a, 64b) im wesentlichen im Bereich der in Längsrichtung verlaufenden Verbindungslinie zwischen zwei Stützplatten (43a-44a) abstützt, so daß deren Rahmen (62a-63a, 62b-63b) gegeneinander in Längsrichtung verschiebbar sind und dabei ihre Stützfunktion beibehalten.

9. System nach einem der Ansprüche 1 bis 8, **dadurch gekennzeichnet, daß** die Verteilmittel ein weiteres Paar von Förderern (51a, 51b) mit Förderriemen (53a, 53b) aufweisen, welche in Förderrichtung hinter dem wenigstens einen Paar von in Längsrichtung ausziehbaren und verkürzbaren Förderern (61a, 61b) angeordnet sind, daß bei diesem zusätzlichen Paar von Förderern (51a, 51b) die Tranporttrume der Förderriemen (53a, 53b) parallel zueinander verlaufen und einen gegenseitigen Abstand voneinander haben, durch den ein weiterer Förder- und Verteilabschnitt (56) gebildet wird, daß der Förder- und Verteilabschnitt (56) eine Einführöffnung (57) hat, die in der Nähe der Abgabeöffnung (22) des ersten Förderabschnittes (20) liegt, und daß dieses weitere Paar von Förderern (51a, 51b) mit seinem in Förderrichtung vorderen Ende mit dem hinteren Ende des wenigstens einen Paares der in Längsrichtung ausziehbaren und verkürzbaren Förderer (61a, 61b) gelenkig verbunden ist.

10. System nach Anspruch 9, **dadurch gekennzeichnet, daß** die Verstellmittel (80, 90) das wenigstens eine Paar der in Längsrichtung ausziehbaren und verkürzbaren Förderer (61a, 61b) in Querrichtung bewegen, wobei die entsprechende Förderachse für die Gegenstände in dem Verteilkanal (65) parallel zur Achse der Aufnahmekanäle (40a, 40b, 40c, etc.) bleibt, und die Verstellmittel das zweite Paar der Rahmen (63a und 63b) in Längsrichtung verschieben.

11. System nach Anspruch 9 oder 10, **dadurch gekennzeichnet, daß** das weitere Paar von Förderern (51a, 51b) mit seinem in Förderrichtung hinteren Ende in Längsrichtung verschiebbar in der Nähe der Abgabeöffnung (22) des ersten Förderabschnittes (20) für die Gegenstände angelenkt ist.

12. System nach einem der Ansprüche 9 bis 11, **dadurch gekennzeichnet, daß** das weitere Paar von Förderern (51a, 51b) in der Nähe seines in Förderrichtung hinteren Endes ein Paar kurzer Führungen (58a, 58b) hat, die eine Verbindung der Abgabeöffnung (22) des ersten Förderabschnittes (20) für die Zuführung der Gegenstände mit der Einführöffnung (57) des weiteren Paares von Förderen (51a, 51b) herstellen.

13. System nach einem der Ansprüche 9 bis 12, **dadurch gekennzeichnet, daß** die Geschwindigkeit der Längsbewegung der Förderriemen (53a, 53b) des weiteren Paares von Förderern (51a, 51b) im wesentlichen gleich der Geschwindigkeit der Längsbewegung der darunterliegenden, aktiven Transportfläche (11a, 14, 11b) des unteren Förderers (10) ist.

14. System nach einem der Ansprüche 9 bis 13, **dadurch gekennzeichnet, daß** die Geschwindigkeit der Längsbewegung der Förderriemen (53a, 53b) des weiteren Paares von Förderern (51a, 51b), die Geschwindigkeit der Längsbewegung der Förderriemen (64a, 64b) des wenigstens einen Paares der in Längsrichtung ausziehbaren und verkürzbaren Förderer (61a, 61b) und die Geschwindigkeit der Längsbewegung des Förderbandes (11) des unteren Förderers (10) im wesentlichen gleich sind.

15. System nach einem der Ansprüche 9 bis 14, **dadurch gekennzeichnet, daß** die Verstellmittel (80, 90) ein erstes Lager (81) haben, das das erste Paar der Rahmen (62a, 62b) trägt und durch Ansteuerung erster Linearverschiebemittel (82, MT) in Querrichtung verstellbar ist, sowie ein zweites Lager (91), das das zweite Paar der Rahmen (63a, 63b) trägt und in Querrichtung verschiebbar auf einer Traverse (92) gelagert ist, welche nach Ansteuerung zweiter Linearverschiebemittel (93a, 93b, 94a, 94b, 95a, 95b, ML) in Längsrichtung verschiebbar ist.

16. System nach einem der Ansprüche 1 bis 8, **dadurch gekennzeichnet, daß** bei dem wenigstens einen Paar von in Längsrichtung ausziehbaren und verkürzbaren Förderern (161a-161b) mit Förderriemen (164a-164b) ein in Förderrichtung hinteres Ende in der Nähe der Abgabeöffnung (22) des ersten Förderabschnittes (20) für die Zuführung der Gegenstände und ein in Förderrichtung vorderes Ende in der Nähe der Einführöffnungen (42a, 42b etc.) des zweiten Förderabschnittes (40) für die Aufnahme der Gegenstände angeordnet ist, und daß die Verstellmittel (180, 190) die in Förderrichtung vorderen Enden des Paares der in Längsrichtung ausziehbaren und verkürzbaren Förderer (161a-161b) in Querrichtung und/oder in Längsrichtung bewegen.

17. System nach Anspruch 16, **dadurch gekennzeichnet, daß** die Verstellmittel (180, 190) das zweite Paar der Rahmen (163a-163b) in Querrichtung und/oder in Längsrichtung bewegen.

18. System nach einem der Ansprüche 1 bis 8, **dadurch gekennzeichnet, daß** das wenigstens eine Paar der in Längsrichtung ausziehbaren und verkürzbaren Förderer (261a-261b) mit den Förderriemen (264a-264b) mit seinem in Förderrichtung hinteren Ende in der Nähe der Abgabeöffnung (22) des ersten Förderabschnittes (20) für die Zuführung der Gegenstände angeordnet ist, daß die Verteilmittel ein weiteres Paar von Förderern (251a, 251b) mit Förderriemen (253a-253b) aufweisen, welches sich in Förderrichtung an das wenigstens eine Paar der in Längsrichtung ausziehbaren und verkürzbaren Förderer (261a-261b) anschließt, daß das weitere Paar von Förderern (251a, 251b) Förderriemen (253a, 253b) aufweist, deren Fördertrume parallel zueinander verlaufen und mit einem Abstand einander gegenüberliegen, wodurch ein weiterer Förder- und Verteilkanal (256) gebildet wird, und daß die Verstellmittel (280, 290) das weitere Paar der Förderer (251a, 251b) in Querrichtung und/oder in Längsrichtung bewegen.

19. System nach Anspruch 18, **dadurch gekennzeichnet, daß** die Verstellmittel (280, 290) das wenigstens eine Paar der Förderer (251a, 251b) in Querrichtung und/oder in Längsrichtung bewegen und dabei die entsprechende Zuführachse für die Gegenstände parallel zur Aufnahmeachse der Aufnahmekanäle (40a, 40b, 40c, etc.) halten.

20. System nach Anspruch 18 oder 19, **dadurch gekennzeichnet, daß** die Geschwindigkeit der Längsbewegung der Förderriemen (253a, 253b) des weiteren Paares der Förderer (251a, 251b) im wesentlichen gleich der Geschwindigkeit der Längsbewegung der darunterliegenden, aktiven Transportfläche (11a, 14, 11b) des unteren Förderers (10) ist.

21. System nach einem der Ansprüche 18 bis 20, **dadurch gekennzeichnet, daß** die Geschwindigkeit der Längsbewegung der Förderriemen (253a, 253b) des weiteren Paares der Förderer (251a, 251b), die Geschwindigkeit der Längsbewegung der Förderriemen (264a, 264b) des wengistens einen Paares der in Längsrichtung ausziehbaren und verkürzbaren Förderer (261a, 261b) und die Geschwindigkeit der Längsbewegung der darunterliegenden, aktiven Transportfläche (11a, 14, 11b) des unteren Förderers (10) im wesentlichen gleich sind.

22. System nach einem der vorhergehenden Ansprüche, **dadurch gekennzeichnet, daß** die aktiven Transportflächen (11a, 14, 11b) des unteren Förderers (10) durch Förderbänder (11a, 14, 11b) gebildet werden.

23. System nach einem der vorhergehenden Ansprüche, **dadurch gekennzeichnet, daß** die aktiven Transportflächen (11a, 14, 11b) des unteren Förderers (10) von einem Bandförderer gebildet werden, der zwei Förderbänder (11a, 11b), welche um Antriebs- und Umlenkrollen (12 und 13) laufen, die in Förderrichtung vorn und hinten angeordnet sind, sowie ein Förderband (14) aufweist, das zwischen den beiden Förderbändern (11a, 11b) angeordnet ist und um die in Förderrichtung vordere Umlenkrolle (13) läuft, und daß das zuletzt genannte Förderband (14) zusätzlich als unteres Förderband für den ersten Förderabschnitt (20) für die Zufuhr der Gegenstände wirkt.

## Revendications

1. Système de distribution d'articles, comprenant :
- des moyens de convoyage sous-jacents (10) s'étendant longitudinalement pour former une surface de transport active sous-jacente (11a, 14, 11 b) pour le convoyage d'articles ;
- une première ligne (20) de fourniture d'articles, positionnée en amont, comprenant un canal unique de fourniture d'articles (21) ayant une ouverture de sortie (22) ;
- une seconde ligne (40) de réception d'articles, positionnée en aval, comprenant une pluralité de canaux de réception d'articles (40a, 40b, 40c, etc.) ayant une pluralité d'ouvertures d'admission (42a, 42b, 42c, etc.) ;
- des moyens de distribution, positionnés entre ladite première ligne (20) de fourniture d'articles et ladite seconde ligne (40) de réception d'articles, pour former un canal de distribution (65) pour recevoir les articles arrivant de ladite ouverture de sortie (22) de la première ligne (20) de fourniture et pour les distribuer de manière sélective à proximité des ouvertures d'admission (42a, 42b, 42c, etc.) de ladite seconde ligne (40) de réception ayant une pluralité de canaux (40a, 40b, 40c, etc.) ; et
- des moyens actionneurs (80, 90) pour déplacer l'ouverture de sortie (66) dudit canal de distribution,
les moyens de distribution comprennent au moins une paire de convoyeurs (61 a-61b; 161a-161b ; 261a-261b) à bandes de convoyeur (64a-64b ; 164a-164b; 264a-264b),
lesdites bandes de convoyeur (64a-64b ; 164a-164b ; 264a-264b) ont des branches de convoyage correspondantes positionnées parallèles les unes aux autres, se faisant face les unes aux autres, et espacées les unes des autres pour former un sous-ensemble de convoyage et de distribution actif (65 ; 165 ; 265) ayant une ouverture d'admission (69 ; 169 ; 269) et une ouverture de sortie (66 ; 166 ; 266) ;
**caractérisé en ce que** les convoyeurs (61a-61b; 161a-161b; 261a-261b) sont extensibles et rétractables longitudinalement ; et
**en ce que** ladite ouverture de sortie (66 ; 166 ; 266) est extensible et rétractable longitudinalement par rapport à l'ouverture d'admission (69 ; 169 ; 269) dudit sous-ensemble de convoyage (65 ; 165 ; 265).

2. Système de distribution d'articles selon la revendication 1, **caractérisé en ce que** ladite ouverture de sortie (66 ; 166 ; 266) est déplacée longitudinalement ou transversalement par rapport à l'ouverture d'admission (69 ; 169 ; 269) par une extension ou un retrait longitudinal de ladite paire de convoyeurs extensibles et rétractables longitudinalement (61 a-61 b ; 161a-161b; 261a-261b) à bandes de convoyeur (64a-64b ; 164a-164b ; 264a-264b).

3. Système selon l'une des revendications précédentes, **caractérisé en ce que** chaque convoyeur extensible et rétractable longitudinalement (61a-61b; 161a-161b; 261a-261b) comprend deux cadres correspondants (62a-63a, 62b-63b ; 162a-163a, 162b-163b ; 262a-263a, 262b-263b) qui sont couplés ensemble (67a-68a, 67b-68b ;167a-168a, 167b-168b ; 267a-268a, 267b-268b) en glissement et avec un guidage longitudinal.

4. Système de distribution d'articles selon la revendication 3, **caractérisé en ce que** ladite ouverture de sortie (66 ; 166 ; 266) est déplacée longitudinalement ou transversalement par rapport à l'ouverture d'admission (69 ; 169 ; 269) en déplaçant longitudinalement les deux cadres (63a-63b ; 163a-163b ; 263a-263b) à l'écart de ou vers les deux autres cadres (62a-62b ; 162a-162b ; 262a-262b).

5. Système selon la revendication 3, **caractérisé en ce que** ledit couplage comprend une barre longitudinale correspondante (67a, 67b ; 167a, 167b ; 267a, 267b) fixée à un cadre (63a, 63b ; 163a,163b ; 263a, 263b) qui peut coulisser de façon guidée entre des rouleaux correspondants supérieurs et inférieurs en roue libre (68a, 68b ; 168a, 168b ; 268a, 268b) qui sont portés par l'autre cadre correspondant (62a, 62b ; 162a, 162b ; 262a, 262b).

6. Système selon l'une des revendications précédentes, **caractérisé en ce que**, pour chaque convoyeur extensible et rétractable longitudinalement (61 a, 61 b ; 161a, 161 b ; 261a, 261b), un premier cadre (62a, 62b ; 162a, 162b; 262a, 262b) est conçu pour supporter deux roues de retour (71a-72a, 71b-72b; 171a-172a, 171b-172b; 271a-272a, 271b-272b) et un second cadre (63a, 63b; 163a, 163b ; 263a, 263b) est conçu pour supporter trois roues de retour (73a-74a-75a, 73b-74b-75b ; 173a-174a-175a, 173b-174b-175b ; 273a-274a-275a, 273b-274b-275b), pour former un chemin externe et de retour pour les bandes (64a, 64b ; 164a, 164b ; 264a, 264b) de telle sorte que la longueur du chemin pour les bandes n'est pas changée durant le mouvement longitudinal entre les cadres de chaque convoyeur.

7. Système selon l'une des revendications précédentes, **caractérisé en ce que** la vitesse d'avance longitudinale des bandes de convoyeur (64a-64b ; 164a-164b ; 264a-264b) de ladite au moins une paire de convoyeurs extensibles et rétractables longitudinalement (61 a-61 b ; 161a-161b; 261 a-261 b) est substantiellement égale à la vitesse d'avance longitudinale de la surface de transport active sous-jacente (11a, 14, 11b) des moyens de convoyage sous-jacents (10).

8. Système selon l'une des revendications précédentes, **caractérisé en ce que** des plaques d'appui postérieur sont prévues pour les bandes de convoyeur (64a, 64b), une plaque (43a, 43b) étant fixée aux cadres (62a, 62b) et une plaque (44a, 44b) étant fixée aux cadres (63a, 63b), lesdites plaques d'appui postérieur (43a-44a, 43b-44b) étant engagées longitudinalement et en glissement les unes par rapport aux autres, et la bande (64a, 64b) étant en appui substantiellement à proximité de la ligne de jonction longitudinale entre deux plaques (43a-44a) de telle sorte que leurs cadres (62a-63a, 62b-63b) peuvent être déplacés longitudinalement les uns par rapport aux autres tout en conservant opérationnelle la fonction d'appui postérieur.

9. Système selon l'une des revendications 1 à 8, **caractérisé en ce que** les moyens de distribution comprennent une paire supplémentaire de convoyeurs (51a, 51b) à bandes de convoyeur (53a, 53b) positionnée en amont de ladite au moins une paire de convoyeurs extensibles et rétractables longitudinalement susmentionnée (61a, 61b), **en ce que** ladite paire supplémentaire de convoyeurs (51a, 51b) a les branches de convoyage de ses bandes de convoyeur (53a, 53b) parallèles les unes aux autres, se faisant face les unes aux autres et espacées les unes des autres pour former un sous-ensemble supplémentaire de convoyage et de distribution (56), **en ce que** ledit sous-ensemble de convoyage et de distribution (56) a une ouverture d'entrée (57) positionnée à proximité de l'ouverture de sortie (22) de la première ligne (20) de fourniture, **en ce que** ladite paire supplémentaire de convoyeurs (51a, 51b) a une extrémité aval associée de façon articulée avec l'extrémité amont de ladite au moins une paire de convoyeurs extensibles et rétractables longitudinalement (61a, 61b).

10. Système selon la revendication 9, **caractérisé en ce que** les moyens actionneurs (80, 90) déplacent transversalement ladite au moins une paire de convoyeurs extensibles et rétractables longitudinalement (61a, 61b) tout en conservant l'axe de fourniture d'articles correspondant du canal (65) parallèle aux axes de réception des canaux de réception (40a, 40b, 40c, etc.), et déplacent longitudinalement la seconde paire de cadres (63a et 63b).

11. Système selon l'une des revendications 9 et 10, **caractérisé en ce que** ladite paire supplémentaire de convoyeurs (51a, 51b) a une extrémité amont articulée et déplaçable longitudinalement positionnée à proximité de l'ouverture de sortie (22) de la première ligne (20) de fourniture d'articles.

12. Système selon l'une des revendications 9 à 11, **caractérisé en ce que** ladite paire supplémentaire de convoyeurs (51 a, 51 b) comprend à proximité de son extrémité aval une paire de guides courts (58a, 58b) pour joindre et relier l'ouverture de sortie (22) de la première ligne (20) de fourniture d'articles, à l'ouverture d'admission (57) de ladite paire supplémentaire de convoyeurs (51a, 51b).

13. Système selon l'une des revendications 9 à 12, **caractérisé en ce que** la vitesse d'avance longitudinale des bandes de convoyeur (53a, 53b) de ladite paire supplémentaire de convoyeurs (51a, 51 b) est substantiellement égale à la vitesse d'avance longitudinale de la surface de transport active sous-jacente (11a, 14, 11b) des moyens de convoyage sous-jacents (10).

14. Système selon l'une des revendications 9 à 13, **caractérisé en ce que** la vitesse d'avance longitudinale des bandes de convoyeur (53a, 53b) de ladite paire supplémentaire de convoyeurs (51a, 51b), la vitesse longitudinale d'avance des bandes de convoyeur (64a, 64b) de ladite au moins une paire de convoyeurs extensibles et rétractables longitudinalement (61a, 61b), et la vitesse d'avance longitudinale de la bande de convoyeur (11) des moyens de convoyage (10), sont substantiellement égale.

15. Système selon l'une des revendications 9 à 14, **caractérisé en ce que** les moyens actionneurs (80, 90) comprennent un premier support (81) pour transporter la première paire de cadres (62a, 62b); ledit support (81) étant déplacé transversalement sur commande par les premiers moyens de déplacement linéaire (82, MT) et un second support (91) pour transporter la seconde paire de cadres (63a, 63b), ledit second support (91) étant couplé en coulissement transversal à une barre transversale (92), ladite barre (92) étant déplacée longitudinalement sur commande par des seconds moyens de déplacement linéaire (93a, 93b, 94a, 94b, 95a, 95b, ML).

16. Système selon l'une des revendications 1 à 8, **caractérisé en ce que** ladite au moins une paire de convoyeurs extensibles et rétractables longitudinalement (161a-161b) à bandes de convoyeur (164a-164b) a une extrémité amont positionnée à proximité de l'ouverture de sortie (22) de la première ligne (20) de fourniture d'articles et une extrémité aval positionnée à proximité des ouvertures d'admission (42a, 42b, etc.) de la seconde ligne (40) de réception d'articles, et **en ce que** les moyens actionneurs (180, 190) déplacent transversalement et/ou longitudinalement les extrémités aval de ladite paire de convoyeurs extensibles et rétractables longitudinalement (161a-161b).

17. Système selon la revendication 16, **caractérisé en ce que** les moyens actionneurs (180, 190) déplacent transversalement et/ou longitudinalement la seconde paire de cadres (163a, 163b).

18. Système selon l'une des revendications 1 à 8, **caractérisé en ce que** ladite au moins une paire de convoyeurs extensibles et rétractables longitudinalement (261a-261b) à bandes de convoyeur (264a-264b) a une extrémité amont positionnée à proximité de l'ouverture de sortie (22) de la première ligne (20) de fourniture d'articles, **en ce que** les moyens de distribution comprennent une paire supplémentaire de convoyeurs (251a, 251b) à bandes de convoyeur (253a-253b) positionnée en aval de ladite au moins une paire de convoyeurs extensibles et rétractables longitudinalement susmentionnée (261a-261b), **en ce que** ladite paire supplémentaire de convoyeurs (251a, 251b) a des bandes de convoyeur (253a, 253b) ayant leurs branches de convoyage positionnées parallèles les unes aux autres, se faisant face les unes aux autres et espacées les unes des autres pour former un sous-ensemble supplémentaire de convoyage et de distribution (256), et **en ce que** les moyens actionneurs (280, 290) déplacent transversalement et/ou longitudinalement ladite paire supplémentaire de convoyeurs (251a, 251b).

19. Système selon la revendication 18, **caractérisé en ce que** lesdits moyens actionneurs (280, 290) déplacent transversalement et/ou longitudinalement ladite au moins une paire de convoyeurs (251a, 251b) tout en conservant l'axe de fourniture d'articles correspondant parallèle à l'axe de réception des canaux de réception (40a, 40b, 40c, etc.).

20. Système selon l'une des revendications 18 et 19, **caractérisé en ce que** la vitesse d'avance longitudinale des bandes de convoyeur (253a, 253b) de ladite paire supplémentaire de convoyeurs (251a, 251b) est substantiellement égale à la vitesse d'avance longitudinale de la surface de transport active sous-jacente (11a, 14, 11b) des moyens de convoyage sous-jacents (10).

21. Système selon l'une des revendications 18 à 20, **caractérisé en ce que** la vitesse d'avance longitudinale des bandes de convoyeur (253a, 253b) de ladite paire supplémentaire de convoyeurs (251a, 251b), la vitesse d'avance longitudinale des bandes de convoyeur (264a, 264b) de ladite au moins une paire de convoyeurs extensibles et rétractables longitudinalement (261a, 261b), et la vitesse longitudinale d'avance de la surface de transport active sous-jacente (11a, 14, 11b) des moyens de convoyage (10) sont substantiellement égales.

22. Système selon l'une des revendications précédentes, **caractérisé en ce que** la surface de transport active sous-jacente (11a, 14, 11b) des moyens de convoyage sous-jacents (10) comprend une ou plusieurs bandes de convoyeur (11a, 14, 11b).

23. Système selon l'une des revendications précédentes, **caractérisé en ce que** la surface de transport active sous-jacente (11a, 14, 11b) des moyens de convoyage sous-jacents (10) comprend une bande de convoyeur constituée de deux bandes (11a, 11b) tournant autour de rouleaux de retour menants (12 et 13) positionnés en amont et en aval et une bande (14) allant en aval autour dudit rouleau de retour aval susmentionné (13) qui est positionné entre lesdites deux bandes (11a, 11b), et **en ce que** ladite dernière bande (14) sert en outre de bande de convoyeur sous-jacente pour la première ligne (20) de fourniture d'articles.
